# EUROPEAN PATENT APPLICATION

(11) **EP 4 804 386 A1**
(43) Date of publication of application: **09.09.2026**
(21) Application number: 26161922.5
(22) Date of filing: 03.03.2026
(51) Int. Cl.: H02K 3/34, H02K 3/30

(54) **STATOR OF ELECTRIC MOTOR**

(30) Priority: 04.03.2025 JP 2025033674
(71) Applicant: Toyota Jidosha Kabushiki Kaisha, Toyota-shi, Aichi-ken 471-8571 (JP)
(72) Inventor: OHTA, Kei, Toyota-shi, Aichi-ken, 471-8571 (JP); URANO, Hiroaki, Toyota-shi, Aichi-ken, 471-8571 (JP); OHIRA, Kengo, Toyota-shi, Aichi-ken, 471-8571 (JP); NAGASAWA, Naohiro, Toyota-shi, Aichi-ken, 471-8571 (JP); MAENO, Tomoaki, Toyota-shi, Aichi-ken, 471-8571 (JP); YAMADA, Noriyoshi, Toyota-shi, Aichi-ken, 471-8571 (JP)
(74) Representative: TBK

(57) **Abstract**

A stator (2; 102) includes: a stator core (3) that includes teeth (4a, 4b, 4c); a coil (10; 110) wound around the teeth (4a, 4b, 4c) in at least two turns (11, 12, 13, 14, 15, 16); and an insulating layer (21, 22; 21, 122) that covers windings of the coil (10; 110). In the stator (2; 102), the thickness of the insulating layer (22) of at least one of the turns (11) is greater than the thickness of the insulating layer (21) of the other turns (12, 13, 14, 15, 16). Alternatively, the dielectric constant of the insulating layer (122) of at least one of the turns (11) is lower than the dielectric constant of the insulating layer (21) of the other turns (12, 13, 14, 15, 16).

## Description

### BACKGROUND OF THE INVENTION

### 1. Field of the Invention

The technique disclosed in the present specification relates to a stator of an electric motor.

### 2. Description of Related Art

A stator includes a stator core and a coil wound around teeth of the stator core. Each winding of the coil is called a turn. The windings of the coil are covered with an insulating layer so that adjacent turns are not electrically connected (see Japanese Unexamined Patent Application Publication No. 2014-203585 (JP 2014-203585 A), for example).

### SUMMARY OF THE INVENTION

By increasing the thickness of the insulating layer that covers the windings, the insulation between adjacent turns can be improved. However, when the thickness of the insulating layer is increased for the entire coil (for all the windings), the cross-sectional area of the coil (the cross-sectional area obtained when the coil is cut along a plane passing through the axis of the coil) increases. The present disclosure provides a stator of an electric motor that can ensure the necessary insulation between turns of a coil while suppressing an increase in the cross-sectional area of the coil.

An aspect of the present disclosure provides a stator of an electric motor, including: a stator core that includes teeth; a coil wound around the teeth in at least two turns; and an insulating layer that covers windings of the coil. As mentioned above, one turn of the coil is called a turn. In the stator disclosed in the present specification, a thickness of the insulating layer of at least one of the turns is greater than a thickness of the insulating layer of the other turns.

In the stator of the electric motor according to the aspect of the present disclosure, two turns that are physically adjacent may not be electrically adjacent, and conversely, two turns that are electrically adjacent may not be physically adjacent. For example, there is a case where the coil includes a plurality of coil segments having a U-shape, and the coil segments are fitted with the teeth. When two coil segments that are physically far apart are electrically connected, a first coil segment positioned next to a second coil segment is physically adjacent to the second coil segment but not electrically adjacent (two electrically connected coil segments are electrically adjacent but not physically adjacent). When a current flows through the coil, the potential difference between turns that are not electrically adjacent is greater than the potential difference between turns that are electrically adjacent.

In the stator of the electric motor according to the aspect of the present disclosure, a thickness of the insulating layer of one of two turns that are physically adjacent and not electrically adjacent may be greater than a thickness of the insulating layer of both of two turns that are physically and electrically adjacent. By making the insulating layer of a turn with a greater potential difference thicker than the insulating layer of the other turns, the necessary insulation can be ensured without increasing the thickness of the insulating layer of the windings for the entire coil. In other words, the stator disclosed in the present specification can ensure the necessary insulation between turns of a coil while suppressing an increase in the cross-sectional area of the coil.

In the stator of the electric motor according to the aspect of the present disclosure, when a current flows, the potential difference is the greatest between the starting end turn and the terminal end turn of the coil. Thus, the starting end turn and the terminal end turn of the coil may be physically adjacent to each other, and the thickness of the insulating layer of one of the starting end turn and terminal end turn may be greater than the thickness of the insulating layer of the other turns. This makes it possible to increase the insulation between turns, the potential difference between which is the greatest when a current flows.

In the stator of the electric motor according to the aspect of the present disclosure, insulation can be improved not only by increasing the thickness of the insulating layer, but also by using an insulating layer with a low dielectric constant. In another aspect of the stator disclosed in the present specification, a dielectric constant of the insulating layer of at least one of the turns is lower than a dielectric constant of the insulating layer of the other turns. An insulating layer with a low dielectric constant is costly. The stator according to another aspect disclosed in the present specification can ensure the necessary insulation between turns of a coil while suppressing the cost of the insulation layer of the coil.

In the stator of the electric motor according to the aspect of the present disclosure, a dielectric constant of the insulating layer of one of two turns that are physically adjacent and not electrically adjacent may be lower than a dielectric constant of the insulating layer of both of two turns that are physically and electrically adjacent. Typically, the starting end turn and the terminal end turn of the coil may be physically adjacent, and the dielectric constant of the insulating layer of one of the starting end turn and the terminal end turn may be lower than the dielectric constant of the insulating layer of the other turns. Such an aspect also can ensure the necessary insulation between the turns while suppressing the cost of the insulation layer of the coil.

In the stator of the electric motor according to the aspect of the present disclosure, as mentioned above, the coil may include a plurality of coil segments having a U-shape and fitted with the teeth. Each coil segment may correspond to each turn. A first arm of the U-shape of a specific coil segment of the coil segments may be electrically connected to a second arm of another coil segment that is not physically adjacent; and the specific coil segment and another coil segment disposed adjacent to the specific coil segment may correspond to two turns that are physically adjacent and not electrically adjacent. Since each coil segment (each turn) can be covered with an insulating layer, it is possible to produce a coil in which the insulating layer of a part of the coil is different from the insulating layer of the remaining part at a low cost. A portion connecting the two arms of a coil segment having a U-shape corresponds to a coil end positioned on the outer side of the stator core. Since the entirety of one coil segment can be covered with an insulating layer, the necessary insulation between turns can be ensured even at the coil end on the outer side of the stator core.

Details of the technique disclosed in the present specification and further modifications will be described in the "DETAILED DESCRIPTION OF EMBODIMENTS" below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a cross-sectional view of a stator according to a first embodiment;
FIG. 2 is a front view of a segment;
FIG. 3 illustrates the electrical connection relationship among a plurality of turns (segments); and
FIG. 4 is a cross-sectional view of a stator according to a second embodiment.

### DETAILED DESCRIPTION OF EMBODIMENTS

### First Embodiment

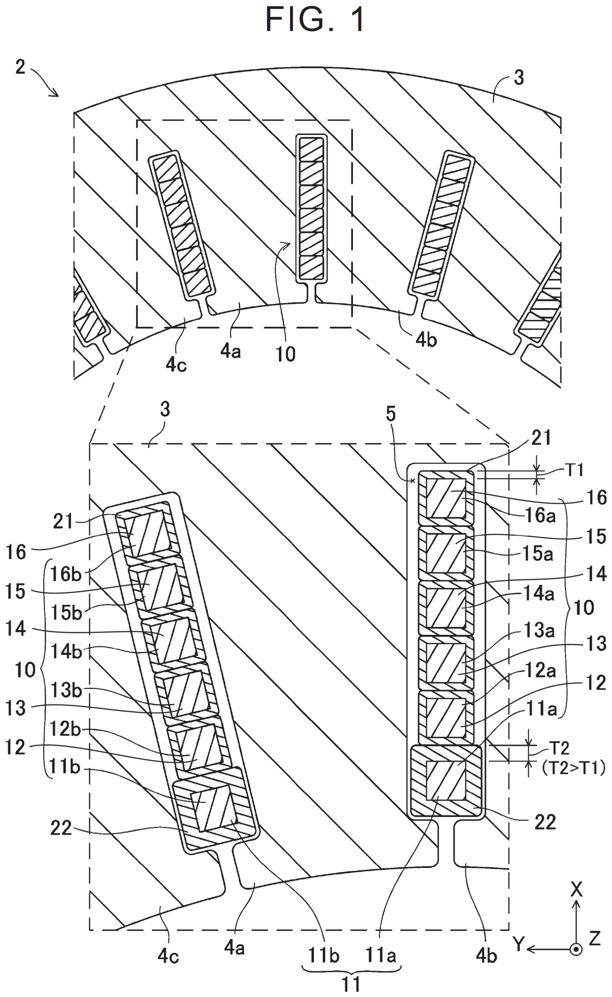

A stator 2 according to a first embodiment will be described with reference to FIGS. 1 to 3. FIG. 1 is a cross-sectional view of the stator 2. FIG. 1 is a cross-sectional view of the stator 2 in a cylindrical shape, the stator 2 being cut along a plane orthogonal to the axis of the stator 2. The Z axis of the coordinate system in the drawing is parallel to the axis of the stator 2, and the XY plane is parallel to the plane orthogonal to the axis. In FIG. 1, only a part of the stator 2 is illustrated.

The stator 2 includes a stator core 3 and a coil 10. The stator core 3 has a cylindrical shape and is provided with a plurality of teeth 4a to 4c on the inner side. The teeth 4a to 4c are arranged along the inner periphery of the stator core 3 in a cylindrical shape. A coil is wound around every other one of the teeth. The lower part of FIG. 1 illustrates an enlarged view of the coil 10 wound around the tooth 4a.

The space between two adjacent teeth (for example, teeth 4a and 4b) is called a slot 5. The windings of the coil 10 pass through the slot 5.

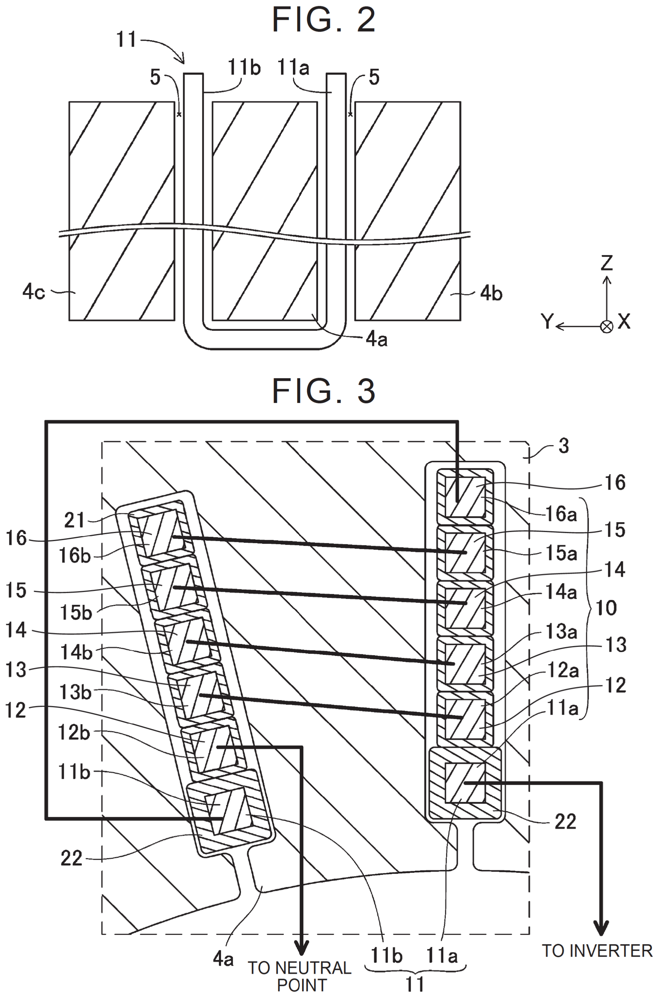

The coil 10 is made up of a plurality of coil segments in a U-shape. Hereinafter, for convenience of description, the "coil segments" will be simply referred to as "segments". FIG. 2 is a front view of one segment 11. FIG. 2 also illustrates a cross section of the teeth 4a to 4c. The segment 11 is made of a conductor (typically copper). The segment 11 is fitted with the tooth 4a. In other words, each arm of the segment 11 is inserted into the slot 5 on each side of the tooth 4a. For convenience of description, one arm of the U-shape of the segment 11 will be referred to as a right arm 11a, and the other arm will be referred to as a left arm 11b. The right arm 11a passes through one side of the tooth 4a, and the left arm 11b passes through the other side of the tooth 4a. A plurality of segments is fitted with one tooth 4a, and the tip of the right arm 11a of one segment 11 is connected to the tip of the left arm 11b of another segment, and the tip of the left arm 11b of the segment 11 is connected to the tip of the right arm of still another segment. In this way, the segments are electrically connected to constitute the coil 10 wound around the tooth 4a. Since one segment 11 surrounds the tooth 4a, one segment corresponds to one turn of the coil. Hereinafter, the "segment 11 (coil segment 11)" will also be referred to as a "turn 11".

Returning to the description of FIG. 1, in the stator 2 in FIG. 1, six segments 11 to 16 are fitted with one tooth 4a. In other words, six segments 11 to 16 fitted with one tooth 4a constitute one coil 10. As mentioned above, each of the six segments 11 to 16 corresponds to a turn. For example, a segment having a right arm 16a and a left arm 16b corresponds to a segment 16 (turn 16). The coil 10 has six turns (turns 11 to 16). The electrical connection relationship among the turns 11 to 16 (segments 11 to 16) will be described later.

The windings of the coil 10 are covered with an insulating layer. In the case of the stator 2, the turns 12 to 16 are covered with a first insulating layer 21 and the turn 11 is covered with a second insulating layer 22. A thickness T2 of the second insulating layer 22 is greater than a thickness T1 of the first insulating layer 21. For ease of understanding, the thicknesses of the insulating layers are exaggerated in the drawing. While the diameter of the windings of the coil is on the order of 1 to 10 mm, the thicknesses of the insulating layers are on the order of 0.01 to 0.1 mm.

The insulation performance of the thick second insulating layer 22 is higher than the insulation performance of the thin first insulating layer. This is because when a current flows through the coil 10, the potential difference between the two adjacent turns 11 and 12 is greater than the potential difference between any other adjacent turns (any two of the turns 12 to 16). By making the thickness T2 of the insulating layer (second insulating layer 22) of at least one turn (turn 11) of the coil greater than the thickness T1 of the insulating layer (first insulating layer 21) of the other turns (turns 12 to 16), it is possible to ensure the necessary insulation between adjacent turns while suppressing an increase in the total cross-sectional area of the coil.

As mentioned above, one turn is composed of one segment. The segments 11 to 16 are separate before being assembled into the stator core 3. The segments 11 to 16 are individually covered with an insulating layer. Only the segment 11 corresponding to the turn 11 can be covered with an insulating layer (second insulating layer 22) that is different from that of the other segments 12 to 16. As a result, a coil 10 in which the thickness of the insulating layer of some turns is greater than the thickness of the insulating layer of the remaining turns can be manufactured at a low cost.

The electrical connection relationship among the turns 11 to 16 (segments 11 to 16) will be described. In FIG. 3, which is the same as the lower part of FIG. 1, the connections between turns (between segments) are indicated by bold lines. One end of the coil 10 is connected to an inverter, and the other end is connected to a neutral point. For convenience of description, one end of the coil 10 will be referred to as a starting end, and the other end will be referred to as a terminal end. In the coil 10, the tip of the right arm 11a of the turn 11 is connected to the inverter, and the tip of the left arm 11b is connected to the tip of the right arm 16a of the turn 16. Hereinafter, for convenience of description, the "tip of the right arm (left arm) of the turn" will be simply referred to as the "right arm (left arm) of the turn". The left arm 16b of the turn 16 is connected to the right arm 15a of the turn 15, and the left arm 15b of the turn 15 is connected to the right arm 14a of the turn 14. The left arm 14b of the turn 14 is connected to the right arm 13a of the turn 13, and the left arm 13b of the turn 13 is connected to the right arm 12a of the turn 12. The left arm 12b of the turn 12 is connected to the neutral point. That is, the coil 10 is electrically connected in the order of the turn 11, the turn 16, the turn 15, the turn 14, the turn 13, and the turn 12. The turn 11 and the turn 16 are electrically adjacent to each other. Similarly, the turn 16 and the turn 15, the turn 15 and the turn 14, the turn 14 and the turn 13, and the turn 13 and the turn 12 are electrically adjacent to each other.

On the other hand, as can be seen from the drawing, the coil 10 is physically arranged in the order of the turn 11, the turn 12, the turn 13, the turn 14, the turn 15, and the turn 16. The turn 11 and the turn 12 are physically adjacent to each other. Similarly, the turn 12 and the turn 13, the turn 13 and the turn 14, the turn 14 and the turn 15, and the turn 15 and the turn 16 are physically adjacent to each other.

The turn 11 corresponds to the starting end of the coil 10, and the turn 12 corresponds to the terminal end. The turn 11 and the turn 12 are physically adjacent to each other but not electrically adjacent to each other. When a current flows through the coil 10, the potential difference between the turn 11 corresponding to the starting end and the turn 12 corresponding to the terminal end is much greater than the potential difference between the other adjacent turns. By making the thickness T2 of the insulating layer (second insulating layer 22) of the turn 11 corresponding to the starting end greater than the thickness T1 of the insulating layer (first insulating layer 21) of the other turns 12 to 16, the insulation between turns with a great potential difference can be made higher than the insulation between the other turns. That is, the stator 2 can ensure insulation according to the potential difference between adjacent turns.

In the stator 2 according to the first embodiment, the thickness T2 of the insulating layer (insulating layer 22) of one of a pair of turns (turns 11 and 12) that is physically adjacent but not electrically adjacent and the potential difference between which is the greatest when a current flows through the coil 10 is greater than the thickness of the insulating layer of one of a pair of turns (two of the turns 12 to 16) that is physically and electrically adjacent. This makes it possible to ensure the necessary insulation between the turns, the potential difference between which is the greatest when a current flows, while suppressing an increase in the cross-sectional area of the entire coil (the cross-sectional area obtained when the coil is cut along a plane orthogonal to the axis). The potential difference is the greatest when the turn 11 at the starting end of the coil 10 and the turn 12 at the terminal end are adjacent to each other.

The technique disclosed in the present specification is not limited to the case where the potential difference between turns is the greatest when a current flows. When a current flows, the potential difference between turns that are physically adjacent and not electrically adjacent is greater than the potential difference between turns that are physically and electrically adjacent. Therefore, the feature of the technique disclosed in the present specification is to make the thickness of the insulating layer of one of two turns that are physically adjacent and not electrically adjacent greater than the thickness of the insulating layer of both of two turns that are physically and electrically adjacent.

### Second Embodiment

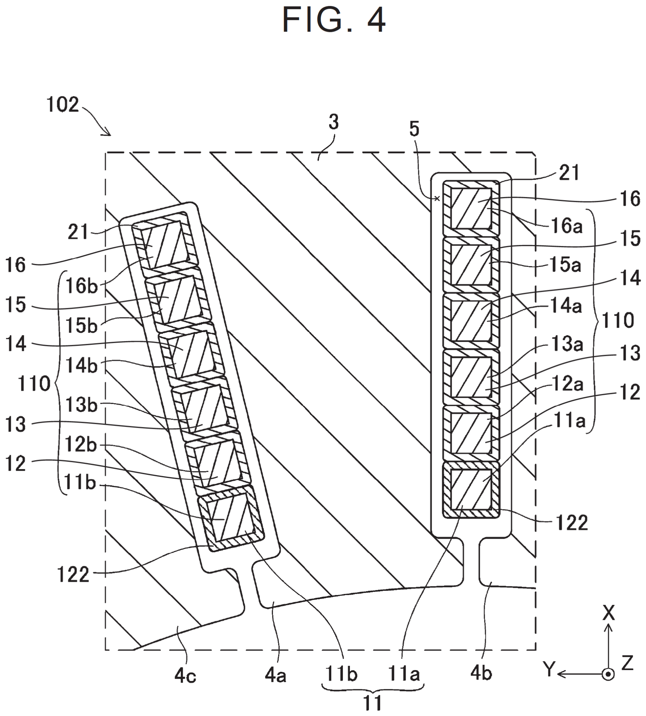

FIG. 4 illustrates a cross section of a stator 102 according to a second embodiment. FIG. 4 corresponds to the lower part of FIG. 1. Insulation is improved by employing a thick insulating layer. Insulation is also improved by employing an insulating layer having a low dielectric constant. In the stator 102 according to the second embodiment, the dielectric constant of the insulating layer of one of two turns that are physically adjacent and the potential difference between which is great when a current flows is lower than the dielectric constant of the insulating layer of the other turn. In the stator 102 according to the second embodiment, a third insulating layer 122 is employed instead of the second insulating layer 22 of the stator 2 according to the first embodiment.

The stator 102 includes a coil 110. The coil 110 is the same as the coil 10 of the stator 2 according to the first embodiment, except for the third insulating layer 122. The electrical connection relationship among a plurality of turns 11 to 16 of the coil 110 is also the same as in FIG. 3. That is, the turns 11 and 12 correspond to the starting end turn and the terminal end turn, respectively, of the coil 110. The dielectric constant of the third insulating layer 122 covering one (turn 11) of the turns 11 and 12 having the greatest potential difference when a current flows is lower than the dielectric constant of the first insulating layer 21 covering the other turns 12 to 16. This feature makes the insulation performance between the turns 11 and 12 higher than the insulation performance between the other adjacent turns. The first insulating layer 21 and the third insulating layer 122 may have the same thickness.

An insulating material with a low dielectric constant is more costly than an insulating material with a high dielectric constant. In the stator 102 according to the second embodiment, a material with a low dielectric constant is employed for the insulating layer of only turns having a great potential difference when a current flows. This allows the stator 102 to ensure the necessary insulation performance between turns having a great potential difference while suppressing the cost of the insulation layers.

In the stator 102 according to the second embodiment, the dielectric constant of the insulating layer 122 of one (turn 11) of the starting end turn 11 and terminal end turn 12 having the greatest potential difference when a current flows is lower than the dielectric constant of the insulating layer of the other turns (turns 12 to 16). In the technique according to the second embodiment, it is only necessary that the dielectric constant of the insulating layer of a turn with a relatively great potential difference be lower than the dielectric constant of the insulating layer of the other turns. That is, in the technique according to the second embodiment, it is only necessary that the dielectric constant of the insulating layer of one of two turns that are physically adjacent and not electrically adjacent be lower than the dielectric constant of the insulating layer of both of two turns that are physically and electrically adjacent.

Also in the stator 102 according to the second embodiment, each turn of the coil 110 is constituted of a segment in a U-shape. Since only the necessary segments need to be covered with an insulating layer having a low dielectric constant, a coil in which only some of the turns are covered with the insulating layer having a low dielectric constant can be manufactured at a relatively low cost.

Points to be noted regarding the techniques described in the embodiments will be described. Two or more turns of the coil may be covered with a thick insulating layer (an insulating layer having a low dielectric constant). Covering all the turns with a thick insulating layer increases the cross-sectional area of the coil, but when some turns are covered with a thick insulating layer and the remaining turns are covered with a thin insulating layer, the increase in the cross-sectional area of the coil can be suppressed. Similarly, covering all the turns with an insulating layer having a low dielectric constant increases the cost of the insulating layer, but when some turns are covered with an insulating layer having a low dielectric constant and the remaining turns are covered with an insulating layer having a non-low dielectric constant, the increase in the cost of the coil can be suppressed.

In some cases, the stator coil includes a first tooth and a second tooth, and a first coil is wound around the first tooth and a second coil is wound around the second tooth. In the technique disclosed in the present specification, the positions of the turns covered with the thick insulating layer (insulating layer having a low dielectric constant) may be different between the first coil and the second coil. The technique disclosed in the present specification can be applied to a stator having a coil wound around teeth in three or more turns.

The coil 10 (coil 110) made up of a plurality of segments has the following features. The coil 10 (coil 110) includes a plurality of segments 11 to 16 (coil segments 11 to 16) having a U-shape and fitted with the tooth 4a. Each of the segments having a U-shape includes a right arm and a left arm, and right arms of all the segments pass through one side of the tooth 4a, and left arms pass through the other side of the tooth 4a. The tip of the right arm of one of the segments is electrically connected to the tip of the left arm of another segment, and a plurality of segments constitutes the coil 10 (coil 110) wound around the tooth 4a. The tip of one arm (first arm, left arm 11b) of the U-shape of a specific segment (segment 11) is electrically connected to the tip of the other arm (second arm, right arm 16a) of another segment (segment 16) that is not physically adjacent.

One segment corresponds to one turn. A specific segment (segment 11) and another segment (segment 12) disposed adjacent to the specific segment correspond to two turns (turns 11 and 12) that are physically adjacent and not electrically adjacent. The thickness of the insulating layer of one (turn 11) of the turns is greater than the thickness of the insulating layer of the other turn. Alternatively, the dielectric constant of the insulating layer of one (turn 11) of the turns is lower than the dielectric constant of the insulating layer of the other turn.

When a current flows through a coil, the potential difference between two turns that are physically adjacent but not electrically adjacent is greater than the potential difference between two turns that are physically and electrically adjacent. By employing a thick insulating layer for one of two turns that are physically adjacent but not electrically adjacent, and by employing a thin insulating layer for both of two turns that are physically and electrically adjacent, it is possible to ensure the necessary insulation between the turns while suppressing an increase in the cross-sectional area of the coil.

Similarly, by employing an insulating layer having a low dielectric constant for one of two turns that are physically adjacent but not electrically adjacent, and employing an insulating layer having a high dielectric constant for both of two turns that are physically and electrically adjacent, it is possible to ensure the necessary insulation between the turns while suppressing the cost of the insulating layers of the coil.

The wording "two turns that are physically adjacent" means that one turn is positioned next to the other turn. The wording "two turns that are physically adjacent" may be rephrased as "two turns that are structurally adjacent". The wording "two turns that are electrically adjacent" means that an end of one turn is electrically connected to an end of the other turn. As illustrated in FIG. 3, the tip of the left arm 11b of the turn 11 is electrically connected to the tip of the right arm 16a of the turn 16 by an electric cable. At this time, the turns 11 and 16 are electrically adjacent to each other. Other turns (turns 12 to 15) are positioned between the turns 11 and 16, and the turns 11 and 16 are not physically adjacent to each other.

The "coil having two turns that are physically adjacent and two turns that are not physically adjacent but are electrically adjacent" is a coil having windings wound in three or more turns. In other words, the "coil having two turns that are physically adjacent and two turns that are not physically adjacent but are electrically adjacent" is a coil having at least three turns of windings.

Although specific examples of the present disclosure have been described in detail above, these are only illustrative, and are not intended to limit the scope of the claims. The technique set forth in the claims includes various modifications and alterations of the specific examples given above. The technical elements indicated in the present specification or drawings exhibit technical utility either alone or in various combinations, and are not limited to the combinations set forth in the claims as originally filed. Furthermore, the technique indicated in the present specification or drawings can achieve a plurality of objects at the same time, and achieving one of these objects itself has technical utility.

## Claims

1. A stator (2; 102) of an electric motor, comprising:
a stator core (3) that includes teeth (4a, 4b, 4c);
a coil (10; 110) wound around the teeth (4a, 4b, 4c) in at least two turns (11, 12, 13, 14, 15, 16); and
an insulating layer (21, 22; 21, 122) that covers windings of the coil (10; 110), wherein
a thickness of the insulating layer (22) of at least one of the turns (11) is greater than a thickness of the insulating layer (21) of the other turns (12, 13, 14, 15, 16),
or
a dielectric constant of the insulating layer (122) of at least one of the turns (11) is lower than a dielectric constant of the insulating layer (21) of the other turns (12, 13, 14, 15, 16).

2. The stator (2) according to claim 1, wherein a thickness of the insulating layer (22) of one of two turns (11, 12) that are physically adjacent and not electrically adjacent is greater than a thickness of the insulating layer (21) of both of two turns (12, 13, 14, 15, 16) that are physically and electrically adjacent.

3. The stator (2) according to claim 2, wherein a starting end turn (11) and a terminal end turn (12) of the coil (10) are physically adjacent, and a thickness of the insulating layer (22) of one of the starting end turn (11) and the terminal end turn (12) is greater than a thickness of the insulating layer (21) of the other turns (12).

4. The stator (102) according to claim 1, wherein a dielectric constant of the insulating layer (122) of one of two turns (11, 12) that are physically adjacent and not electrically adjacent is lower than a dielectric constant of the insulating layer (21) of both of two turns (12, 13, 14, 15, 16) that are physically and electrically adjacent.

5. The stator (102) according to claim 4, wherein a starting end turn (11) and a terminal end turn (12) of the coil (110) are physically adjacent, and a dielectric constant of the insulating layer (122) of one of the starting end turn (11) and the terminal end turn (12) is lower than a dielectric constant of the insulating layer (21) of the other turns (12).

6. The stator (2; 102) according to any one of claims 1 to 5, wherein:
the coil (10; 110) includes a plurality of coil segments (11, 12, 13, 14, 15, 16) having a U-shape and fitted with the teeth (4a, 4b, 4c);
each of the coil segments (11, 12, 13, 14, 15, 16) corresponds to each of the turns (11, 12, 13, 14, 15, 16);
a first arm of the U-shape of a specific coil segment of the coil segments (11) is electrically connected to a second arm of another coil segment (16) that is not physically adjacent; and
the specific coil segment (11) and another coil segment (12) disposed adjacent to the specific coil segment (11) correspond to two turns (11, 12) that are physically adjacent and not electrically adjacent.
